**Europäisches Patentamt**

**European Patent Office**

**Office européen des brevets**

(19)

(11) Veröffentlichungsnummer: **0 184 033**
**B1**

(12) **EUROPÄISCHE PATENTSCHRIFT**

(45) Veröffentlichungstag der Patentschrift:
**13.07.88**

(51) Int. Cl.⁴: **F 16 P 3/08**

(21) Anmeldenummer: **85114361.0**

(22) Anmeldetag: **12.11.85**

(54) **Verriegelungs- und Sicherheitsvorrichtung und Verfahren zu ihrem Betrieb.**

(30) Priorität: **05.12.84 DE 3444325**

(43) Veröffentlichungstag der Anmeldung:
**11.06.86 Patentblatt 86/24**

(45) Bekanntmachung des Hinweises auf die Patenterteilung:
**13.07.88 Patentblatt 88/28**

(84) Benannte Vertragsstaaten:
**CH DE FR GB IT LI SE**

(56) Entgegenhaltungen:
**EP - A - 0 109 590**
**DE - B - 2 329 964**
**DE - U - 7 607 709**
**DE - U - 8 414 199**
**GB - A - 2 107 383**

**BETRIEBSTECHNIK, Band 24, Nr. 3, März 1983, Seiten 50, 51 und 7, Technischer Verlag Resch KG, Gräfelfing, DE; "Sicherheit, die man nicht überlisten kann"**

(73) Patentinhaber: **Schunk Metall und Kunststoff GmbH, Hauptstrasse 97, D-6301 Wettenberg 1 (DE)**

(72) Erfinder: **Kirschbaum, Berthold, Kaiser-Friedrich-Strasse 114, D-4040 Neuss 1 (DE)**

## Beschreibung

Die Erfindung betrifft eine Verriegelungs- und Sicherheitsvorrichtung mit den Merkmalen des Oberbegriffs des Anspruchs 1.

Eine solche Vorrichtung ist z.B. aus der DE-A-3 242 525 (EP-A-109 590) bekannt. Bei dieser bekannten Sicherheitstürverriegelung zum Schutz von gefahrbringenden Bewegungen einer Fertigungseinrichtung sind alle Bauelemente der Sicherheitsvorrichtung und für das Öffnen und Schliessen der Tür in einem Gehäuse vereinigt, so dass für diese Funktion nur ein Bauteil erforderlich ist. Das ist bei der bekannten Einrichtung dadurch erreicht, dass zwei Grenzlagefühler und ein Hubmagnet einer elektromechanischen Sperreinrichtung in einem Gehäuse zu einer Baueinheit zusammengefasst sind. Dabei ist als erster Grenzlagefühler ein Sicherheitsgrenztaster als ein unter zur Tür hin gerichteter Federkraft stehender Stössel an einem Schalter mit zwangsläufiger Kontaktöffnung über einen Nocken, eine Schrägfläche o. dgl. an der Tür bewegbar. Ausserdem ist ein in eine Verriegelungsöffnung an der Tür einführbarer, unter zur Tür hin bzw. von der Tür weg gerichteter Federkraft stehender Verriegelungsbolzen der elektromechanischen Sperreinrichtung mit einem zweiten Grenztaster, der als indirekt wirkender, die Stellung des Hubmagneten der Sperreinrichtung abtastender Bügel als Grenzlagefühler ausgeführt ist an einen zweiten Schalter mit zwangsläufiger Kontaktöffnung mechanisch gekoppelt.

Nachteil der bekannten Anordnung ist es, dass der Stössel des ersten Grenztasters von der Schutzeinrichtung, z.B. der Tür, in geöffneter Stellung über deren gesamten Öffnungsweg zwangsläufig eingedrückt sein muss. Das lässt sich z.B. bei Falttüren schwer oder gar nicht durchführen. Ausserdem ist die bekannte Einrichtung zum Einsatz an Schwenktüren nicht geeignet. Ein weiterer Nachteil der bekannten Einrichtung liegt darin, dass der Hubmagnet während der ganzen Zeit der Türöffnung erregt sein muss und schliesslich ist die bekannte Einrichtung nicht ausreichend gegen unerwünschte Manipulation gesichert. In der Praxis wird immer wieder versucht, bei geöffneter Schutzeinrichtung durch Schraubendreher, Drahtstücke oder Ähnliches die Einrichtung mit der gefahrbringenden Bewegung in Betrieb zu setzen. Die Aufgabe der vorliegenden Erfindung ist es somit, eine Verriegelungs- und Sicherheitsvorrichtung zum Verschliessen der abschirmenden Tür einer Einrichtung mit gefahrbringender Bewegung so zu verbessern, dass die eine mechanische Sperre zum Zurückhalten des Magnetankers des Hubmagneten aufweist, so dass eine ständige Erregung des Magneten in Fortfall kommt. Die Vorrichtung soll einen weitgehenden Schutz vor unbefugten Manipulationen durch Drähte o. dgl. bieten. Sie soll für die verschiedensten Türarten, wie z.B. Schwenktüren, Schiebetüren, Falttüren, einsetzbar sein. Die Stellung des Hubmagneten soll von einem Grenztaster überwacht sein.

Die zur Lösung der gestellten Aufgabe notwendigen, wesentlichen Merkmale der Erfindung sind in Patentanspruch 1 genannt. Die Unteransprüche nennen Ausführungsarten der Erfindung.

Die Zeichnung stellt Ausführungsformen der Erfindung dar. Es zeigen:

Fig. 1 und 2 zwei zueinander senkrechte Ansichten des Schalters einer Sicherheitstürverriegelung, etwa entsprechend der DE-A-3 242 525 mit an dessen Gehäuse nebeneinander angeordneten Verriegelungskopf und Umlenkkopf,

Fig. 3 im lotrechten Schnitt einen an das Schaltergehäuse lösbar angesetzten Umlenkkopf,

Fig. 3a im Horizontalschnitt den Umlenkkopf nach Fig. 3,

Fig. 4 den Umlenkkopf nach Fig. 3 in Hintereinanderanordnung mit dem Verriegelungskopf, ebenfalls im lotrechten Schnitt,

Fig. 4a einen Teilbereich des Schalters nach Fig. 2, z.T. im Schnitt,

Fig. 5 Ausführungsformen des Betätigers als Schlüssel in Form eines einfachen Stanzteiles,

Fig. 6 und 7 Schaltpläne des Stromlaufplanes einerseits bei federverriegelter Schutzvorrichtung, andererseits bei stromverriegelter Schutzvorrichtung.

Besondere Vorteile der neuen Konstruktion liegen in der einfachen und sicheren Ausführung, die schock- und vibrationsfest ist.

Ausserdem ist eine leichtgängige Betätigung durch die Drehbewegung des Kurvenstücks bei günstigen Hebelarmverhältnissen erreicht. Dadurch ergibt sich eine hohe Schaltspiellebensdauer und hohe Betätigungsgeschwindigkeit. Ausserdem ist die Konstruktion äusserst überlistungssicher. Falls eine Manipulation beabsichtigt ist, ist eine Rückstellung des Kurvenstücks kaum ohne den vorschriftsgemässen Schlüssel erreichbar. Die Gesamtkonstruktion ist sehr klein. Schliesslich ist der Stösselkopf auch bei anderen Grenztastersicherheitsschaltern ohne weiteres einsetzbar.

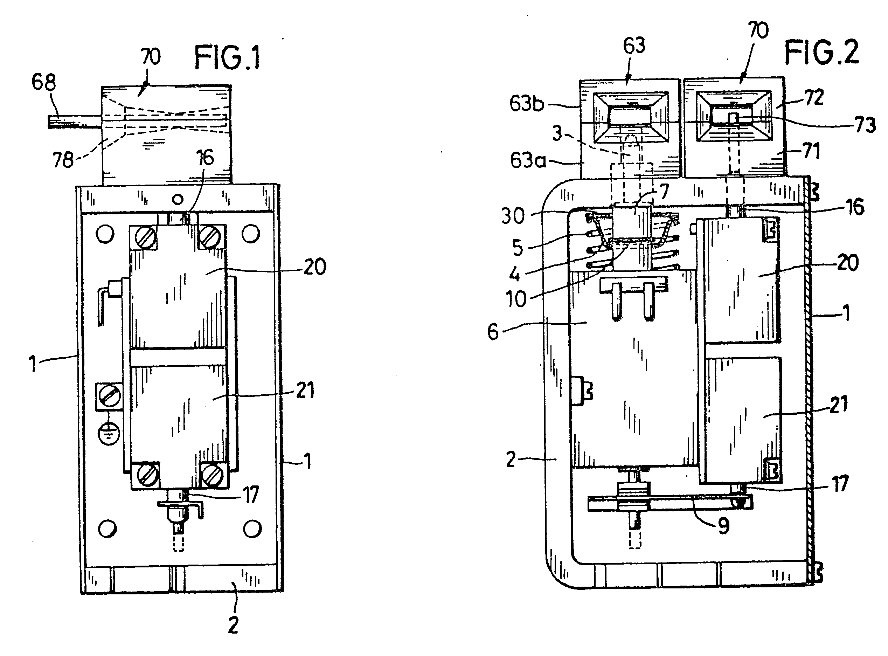

Fig. 1 und 2 zeigen den mit der magnetischen Verriegelungsvorrichtung vereinigten Sicherheitsschalter mit den Gehäuseteilen 2 und 1. Die Gehäuseteile können aber auch anders ausgebildet sein. Im Inneren des Gehäuses befinden sich die beiden Schalter 20 und 21, jeweils mit ihren Stösseln 16 und 17, weiterhin der Hubmagnet 6, der über den Bügel 9 mit dem Stössel 17 des Schalters 21 verbunden ist. Weiterhin ist zu sehen die sich am Gehäuse des Hubmagneten 6 abstützende Druckfeder 5, die am anderen Ende auf einer axial gleitbaren Federlagerscheibe 30 aufliegt. Zwischen Feder und Lagerscheibe 30 ist zwischen Sicherungsringen 10 eine Formscheibe 4 eingeklemmt, die mit dem Haltebolzen 7 des Verriegelungsbolzens 3 fest verbunden ist. An das Gehäuse angesetzt sind der Verriegelungskopf 63 und der Stösselkopf 70, die aus je zwei Gehäuseteilen 63a und 63b sowie 71 und 72 bestehen. Fig. 1 zeigt im Stösselkopf 70 den sich zunächst verjüngenden, dann wieder erweiternden Öffnungskanal 78, in dem der Betätiger 68 nur angedeutet ist.

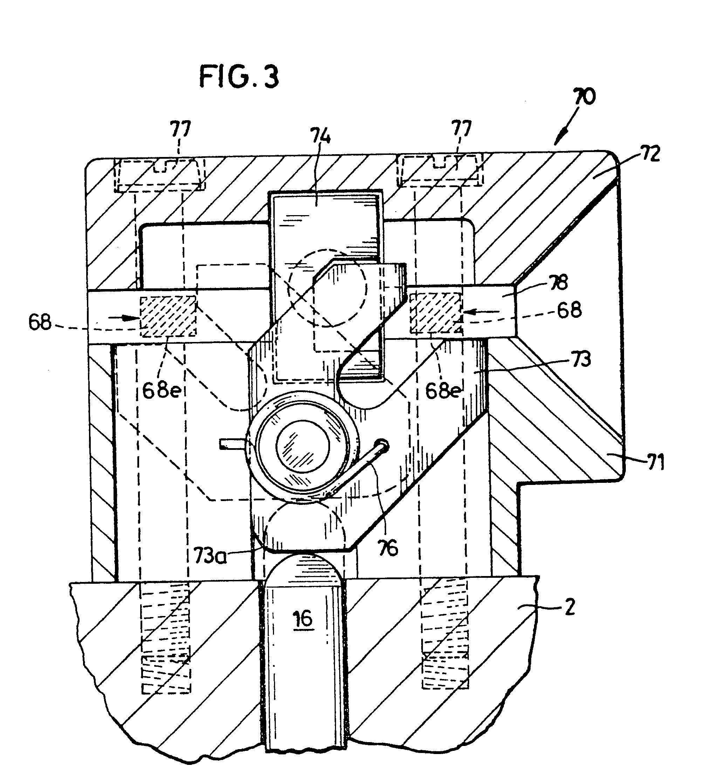

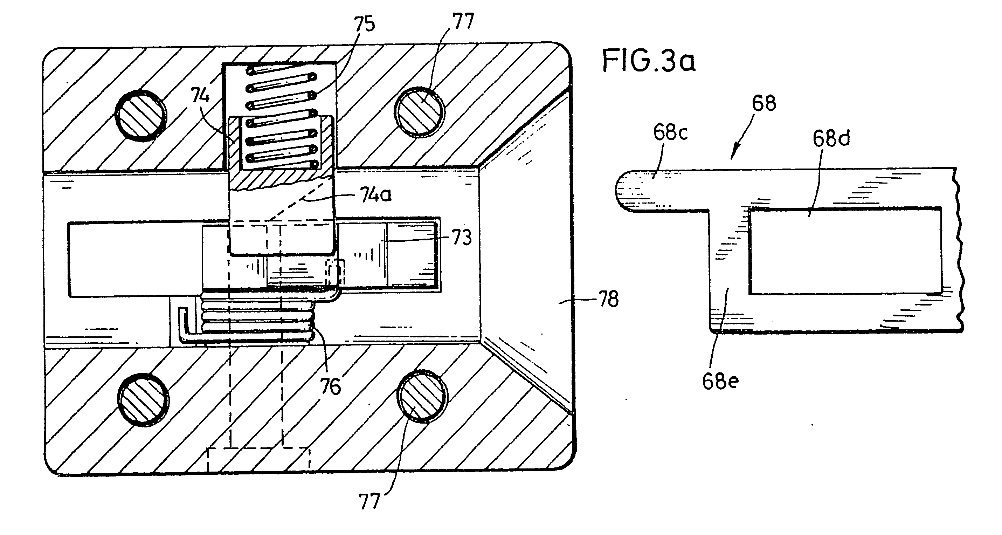

Fig. 3 zeigt den Stösselkopf 70 mittels der durch ihn hindurchgehenden Schrauben 77 am Gehäuseteil 2 des Schalters befestigt. Der Stössel 16 des Schalters ist durch das rechtsherumgeschwenkte Schaltstück 73 in das Gehäuse 2 eingedrückt. Er wird in dieser Lage durch die Drehfeder 76 gehalten. Ausserdem liegt der Sperrschieber 74 über dem einen Schenkel des Schaltstücks 73 und verhindert somit dessen unbefugtes Schwenken.

Der Betätiger 68, ist im Schnitt dargestellt, jeweils in der Lage, in der er vor dem jeweiligen Schwenken des mit der Schaltkurve 73a versehenen Schaltstücks 73, das in der verschwenkten Lage gestrichelt dargestellt ist, liegt.

Fig. 3a zeigt den Sperrschieber 74 und angedeutet die Druckfeder 75, die bestrebt ist, ihn jeweils über das Schaltstück 73 zu schieben. Ausserdem ist mit 74a die Schrägfläche angedeutet, an der das Ansatzstück 68c des Betätigers 68 entlanggleitet und dadurch den Sperrschieber 74 gegen den Druck der Feder 75 verschiebt, so dass er das Schaltstück zum Schwenken freigibt. Durch diese Anordnung wird erreicht, dass ungewollte Manipulationen durch Drahtstücke o. dgl. von aussen her durch den Öffnungskanal 78 unmöglich sind.

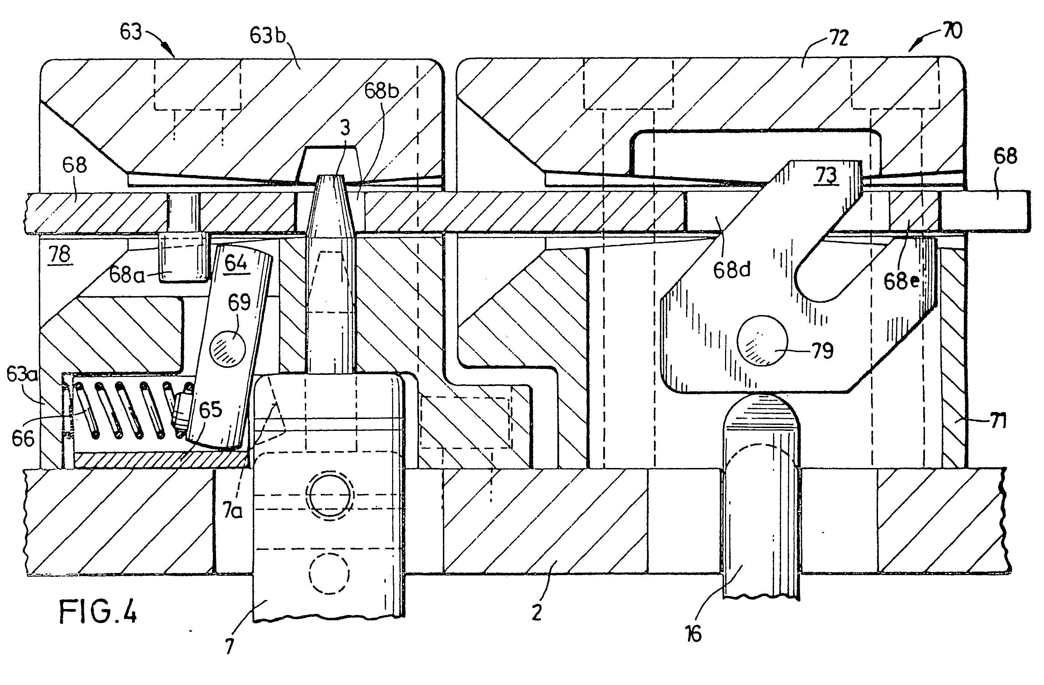

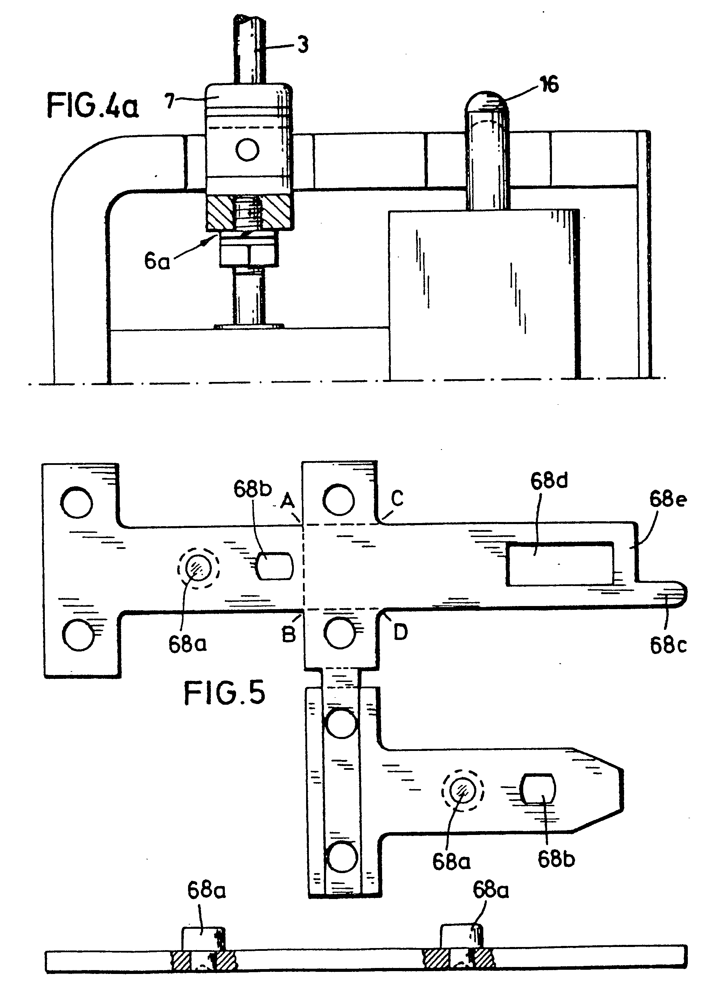

In Fig. 4 sind die Einzelteile des Umlenkkopfs 70 nur angedeutet. An dem in den Öffnungskanal 78 eingeschobenen Betätiger sieht man die Öffnung 68d für das Durchschwenken des Schaltstücks 73, die Öffnung 68b für den Eintritt des Verriegelungsbolzens 3 und den Nietbolzen 68a, der in dieser Lage den um die Schwenkachse 69 schwenkbaren Sperrhebel 64 aus der Ausnehmung 7a im Haltebolzen 7 des Hubmagneten herausgeschwenkt hat.
Eine Druckfeder 66 ist einerseits am Gehäuseteil 63a, andererseits am anderen Ende des Sperrhebels 64 abgestützt und kann diesen bei Herausziehen des Betätigers 68 und nach Einziehen des Verriegelungsbolzens 3 durch den Hubmagneten in die Ausnehmung 7a des Haltebolzens 7 einschwenken. Dadurch wird erreicht, dass der Hubmagnet bei geöffneter Tür nicht dauernd erregt zu sein braucht.

In Fig. 4 ist eine zwischen Haltebolzen 7 und Magnetanker eingeschaltete Kupplung 6a nur angedeutet. Diese Kupplung ermöglicht eine schwimmende Lagerung sowohl axial wie radial des Bolzens 7 und damit auch des Verriegelungsbolzens 3. Diese schwimmende Lagerung ist zweckmässig, da der Verriegelungsbolzen 3 und der Haltebolzen 7 des Magnetankers spielarm gelagert sind und dadurch bei massversetzten Lagerbohrungen im Gehäuse 63a und/oder Anker des Hubmagneten 6 ein Klemmen des Verriegelungsbolzens 3 und des Haltebolzens 7 verhindert wird.

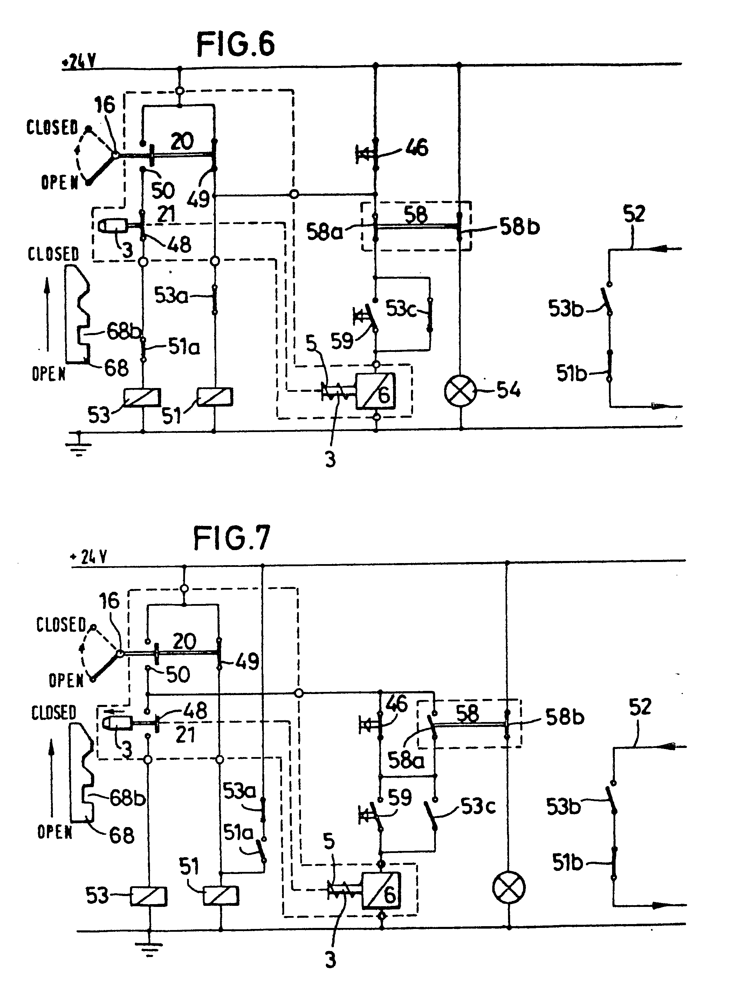

Fig. 5 zeigt in Draufsicht Form des Betätigers 68 jeweils mit dem Ansatzstück 68c, der Durchschwenköffnung 68d für das Schaltstück 73, der Verriegelungsöffnung 68b für den Verriegelungsbolzen 3, der Fläche 68e zum Halten des Schaltstücks 73 sowie mit dem Bolzen 68a, der sich hinter den Sperrhebel 64 legen kann. Ausserdem sind noch die Linien A - B und A - C und B - D dargestellt, an denen der gestanzte Betätiger getrennt werden kann. Weiterhin sind nicht näher bezeichnete Schraublöcher angedeutet, mit denen der Betätiger an der Tür zu befestigen ist.
Der Funktionsablauf der Vorrichtung wird nachstehend anhand des Stromlaufplanes nach Fig. 6 einer federverriegelten Schutztür, die also ruhestromverriegelt ist, erläutert.
Fig. 6 zeigt den Zustand bei geöffneter Tür.

1. Offene Tür:
Nach Einschaltung des Stromkreises ( + 24V) und bei geöffneter Tür kann die gefahrbringende Bewegung über die Strombahn 52 nicht eingeschaltet werden, weil der Magnet 6 über den Kontakt 49 des Schalters 20, den Kontakt 58a des Stillstandswächters 58 und den Ruhekontakt 53c des Relais 53 erregt ist und somit den Kontakt 48 des Schalters 21 geöffnet hält, das Relais 51 über Kontakt 49 ebenfalls erregt ist und seinen Ruhekontakt 51a geöffnet hält und das Relais 53 nicht erregt werden kann und somit die Strombahn 52, die die gefahrbringende Bewegung freigibt, mit dem Kontakt 53b des Relais 53 nicht geschlossen werden kann; der Kontakt 51b des erregten Relais 51 hält zusätzlich noch die Strombahn 52 offen.

2. Türschliessen und Verriegeln:
Beim Türschliessen schwenkt der Betätiger 68 das Schaltstück 73 herum, so dass der an seiner Schaltkurve 73a gleitende Stössel 16 des Schalters 20 aus dem Gehäuse 2 heraustritt, damit der Kontakt 50 geschlossen und der Kontakt 49 geöffnet wird. Durch Betätigen des Drucktasters 46 wird nun die Magnetspule des Hubmagneten 6 und das Relais 51 stromlos. Durch Federkraft wird nun der Verriegelungsbolzen 3 in die Verriegelungsöffnung 68b hineingefahren, so dass die Tür verriegelt ist. Der Kontakt 48 des Schalters 21 wird durch die Hubbewegung geschlossen, so dass das Relais 53 über ihn und die Kontakte 50 und 51a erregt wird. Das Relais 53 schliesst mit seinem Arbeitskontakt 53b die Strombahn 52, in der sich vorher der Relaiskontakt 51b in geschlossener Stellung befand.

3. Gefährliche Bewegung einschalten:
Über die geschlossene Strombahn 52 erfolgt nun über einen nicht dargestellten Schaltungsteil die Einschaltung der gefährlichen Bewegung. Der Stillstandswächter 58 spricht jetzt an und öffnet seinen Kontakt 58a. Solange die gefährliche Bewegung anhält und der Stillstandswächterkontakt 58a geöffnet ist, kann der Magnet 6 über den Drucktaster 59 nicht eingeschaltet werden.

4. Entriegeln und Öffnen der Tür:
Nach dem Ausschalten der gefährlichen Bewegung durch einen nicht dargestellten Schaltungsteil und nach einem ggf. auftretenden Nach- oder Auslauf der gefährlichen Bewegung meldet der Stillstandswächter 58 durch Schliessen des Kontaktes 58b Stillstand. Der Kontakt 58a hat ebenfalls geschlossen, so dass über die Betätigung des Drucktasters 59 die Magnetspule des Hubmagneten 6 erregt wird und dieser den Verriegelungsbolzen 3 aus der Verriegelungsöffnung 68b herauszieht und die Tür geöffnet werden kann. Der Kontakt 48 des Schalters 21 wird während der Hubbewegung des Magneten 6 über den gekoppelten Bügel 9 und den Schalterstössel 17 geöffnet und hebt die Erregung des Relais 53 auf, so dass die Strombahn 52 durch Kontakt 53b unterbrochen wird. Durch Öffnen der Tür wird über die Ausnehmung 68d des Betätigers 68 das Schaltstück 73 zwangsläufig geschwenkt und das wiederum betätigt über seine Schaltkurve 73a den Stössel 16 des Schalters 20 und öffnet damit wiederum zwangsläufig den Kontakt 50. Eine Einschaltung der gefahrbringenden Bewegung kann erst dann wieder erfolgen, wenn die Tür geschlossen ist und die Verriegelung gemäss vorstehender Ziffer 2. erneut erfolgte.

Der Kontakt 53a dient zur gegenseitigen Verriegelung der Relais 51 und 53.

Der Stromlaufplan nach Fig. 7 für eine stromverriegelte Tür entspricht dem nach Fig. 6. Hier sind jedoch die Drucktaster 46 «Verriegeln» und 59 «Entriegeln» gegeneinander vertauscht. Bei dieser Anordnung ist der Hubmagnet um 180° verschwenkt gegenüber der vorher beschriebenen Anordnung eingebaut, so dass der Magnetanker und damit der Verriegelungsbolzen 3 bei erregten Magneten in die Verriegelungsöffnung 68b eintritt. Auch bei dieser Anordnung kann eine ständige Erregung des Hubmagneten fortfallen, wenn man den Sperrhebel 64 und den Haltebolzen 7 des Hubmagneten so ausbildet, dass der Verriegelungsbolzen 3 auch in der herausgefahrenen Lage festgehalten ist.

*Bezugszeichenliste*

1 Deckel
2 Gehäuse
3 Verriegelungsbolzen
4 Formscheibe
5 Druckfeder
6 Hubmagnet
6a Kupplung
7 Haltebolzen am Magnetanker
7a Ausnehmung
9 Bügel
10 Sicherungsring
16 Stössel am Schalter 20
17 Stössel am Schalter 21
20 erster Schalter
21 zweiter Schalter
30 Federlagerscheibe
46 Drucktaster
48 Kontakt des Schalters 21
49 Kontakt des Schalters 20
50 Kontakt des Schalters 20
51 Relais
51a Ruhekontakt von 51
51b Kontakt von 51
52 Strombahn
53 Relais
53a Kontakt von 53
53b Kontakt von 53
53c Ruhekontakt von 53
54 Lampe
63 Verriegelungskopf
63a Gehäuseteil
63b Gehäuseteil
64 Sperrhebel
65 U-Halter
66 Druckfeder
67 Kerbstift
68 Betätiger
68a Nietbolzen
68b Verriegelungsöffnung
68c Ansatzstück
68d Ausnehmung
68e Haltefläche
69 Schwenkachse
70 Umlenkkopf
71 Gehäuseteil
72 Gehäuseteil
73 Schaltstück
73a Schaltkurve
74 Sperrschieber
74a Schrägfläche
75 Feder
76 Drehfeder
77 Schraube
78 Öffnungskanal
79 Schwenkachse

**Patentansprüche**

1. Verriegelungs- und Sicherheitsvorrichtung für eine, eine Einrichtung mit gefahrbringender Bewegung abschirmende, Tür, bei der ein unter nach aussen gerichteter Kraft einer Feder stehender Stössel (16) eines Sicherheitsgrenztasters (20) und ein unter nach aussen gerichteter Kraft einer weiteren Feder (5) stehender Verriegelungsbolzen (3) eines Hubmagneten (6) in einer Wand des Gehäuses (2) der Vorrichtung axial gleitbar gehalten sind, dadurch gekennzeichnet, dass an der Tür ein die Verriegelungsöffnung (68b) f1ur den Verriegelungsbolzen (3) aufweisender ein- oder mehrteiliger Betätiger (68) für den Stössel (16) des Schalters (20) derart angeordnet ist, dass

a) der Stössel (16) über eine Kurve (73a) eines schwenkbaren Schaltstückes (73) bei herausgezogenem Betätiger (68) in seiner zwangsläufigen, nach innen gerichteten Lage durch einen das Schaltstück (73) unverschwenkbar haltenden Sperrschieber (74) gehalten ist und dass beim Hineinschieben des Betätigers (68) in den Öffnungskanal (78) der Sperrschieber (74) durch den Betätiger (68) in eine Lage gebracht wird, in der er das Schaltstück (73) zum Schwenken freigibt und dass beim weiteren Einschieben des Betätigers (68) nach Schwenken des Schaltstückes (73) der Stössel (16) in seine nach aussen gerichtete Grundstellung gleitbar ist, und dass

b) der Verriegelungsbolzen (3) bei herausgezogenem Betätiger (68) in seiner aus der Verriegelungsöffnung (68b) herausgezogenen Lage durch einen Sperrhebel (64) unverschiebbar gehalten ist und beim Hineinschieben des Betätigers (68) in den Öffnungskanal (78) der Sperrhebel (64) in eine Lage gebracht und in ihr gehalten wird, in der der Verriegelungsbolzen (3) in die Verriegelungsöffnung (68b) im Betätiger (68) einrastbar ist und der Sperrhebel (64) beim Herausziehen des Betätigers (68) selbsttätig wieder den Verriegelungsbolzen (3) sperrt.

2. Vorrichtung nach Anspruch 1, dadurch gekennzeichnet, dass der parallel zur Schwenkachse des Schaltstücks (73) verschiebbare, unter zum Schaltstück hin gerichteten Druck einer Feder (75) stehende Sperrschieber (74) eine zur Einführungsöffnung des Öffnungskanals hin gelegene Schrägfläche (74a) aufweist, an der entlang ein seitliches Ansatzstück (68c) des Betätigers (68) beim Hineinschieben in den Öffnungskanal (78) gleiten kann und dabei den Sperrschieber (74) in die Freigabelage bringt (Fig. 4).

3. Vorrichtung nach Anspruch 1 oder 2, dadurch gekennzeichnet, dass das U-förmige Schaltstück (73) an seinem die Schenkel verbindenden Joch innen die Schwenkachse (79) und aussen die Schaltkurve (73a) aufweist und der Betätiger (68) beim Hinein- bzw. Herausschieben an einem der Schenkel anliegt und dadurch das Schaltstück (73) verschwenkt (Fig. 3).

4. Vorrichtung nach einem der Ansprüche 1 bis 3, dadurch gekennzeichnet, dass um die Schwenkachse (79) des Schaltstücks (73) eine einendig im Gehäuse (2 bzw. 71) festgelegte Drehfeder (76) liegt, deren anderes Ende in das Schaltstück (73) eingreift und dieses bei herausgezogenem Betätiger (68) in seiner Schwenklage hält.

5. Vorrichtung nach einem der Ansprüche 1 bis 4, dadurch gekennzeichnet, dass der Sperrhebel (64) schwenkbar angeordnet ist und in seiner einen Schwenklage mit seinem einen Ende durch eine Feder (66) in einer Ausnehmung (7a) eines den Verriegelungsbolzen (3) haltenden Bolzens (7) (des Hub-Magnetankers) und in seiner anderen Schwenklage durch einen Nietbolzen (68a) am Betätiger (68) gehalten ist.

6. Vorrichtung nach einem der Ansprüche 1 bis 5, dadurch gekennzeichnet, dass der Öffnungskanal (78) vom Bereich der Schwenkachse (79) des Schaltstücks (73) aus und vom Bereich der Längsachse des Verriegelungsbolzens (3) aus angepasst an den Schwenkweg einer schwenkbaren Tür nach beiden Seiten hin erweitert ist.

7. Vorrichtung nach einem der Ansprüche 1 bis 6, dadurch gekennzeichnet, dass der Verriegelungskopf (63) und der Umlenkkopf (70) hintereinander oder nebeneinander angeordnet sind.

8. Vorrichtung nach einem der Ansprüche 1 bis 7, dadurch gekennzeichnet, dass der Betätiger (68) eine Ausnehmung als Verriegelungsöffnung (68b) und eine Ausnehmung (68d) zum Durchschwenken der Schenkel des Schaltstücks (73) beim Schieben des Betätigers (68) sowie einen Nietbolzen (68a) zum Halten des Sperrhebels (64) aufweist.

9. Vorrichtung nach einem der Ansprüche 1 bis 8, dadurch gekennzeichnet, dass der Betätiger (68) einstückig in der Ausführungsform für Hintereinanderanordnung von Verriegelungskopf (63) und Umlenkkopf (70) hergestellt und dass durch Abtrennen von Teilen nach Trennlinien A - B bzw. A - C und B - D der Betätiger (68) auch für Nebeneinanderliegen von Verriegelungskopf und Stösselkopf einsetzbar ist.

10. Vorrichtung nach einem der Ansprüche 1 bis 9, dadurch gekennzeichnet, dass der Verriegelungsbolzen (3) an seinem Haltebolzen (7) in einer Kupplung (6a) axial und radial schwimmend gelagert ist.

11. Verfahren zum Betrieb einer Verriegelungs- und Sicherheitsvorrichtung mit den Merkmalen einer der Ansprüche 1 bis 10, dadurch gekennzeichnet, dass nach Betätigung eines Schalters (46 bzw. 59), durch den der Stromkreis der Hubmagneten (6) schaltbar ist zum Türschliessen durch einen an der Tür angeordneten Betätiger (68), der in den Öffnungskanal (78) einfährt, das Schaltstück (73) derartig betätigt wird, dass der Stössel (16) am ersten Schalter (20) für den Stromkreis der gefahrbringenden Bewegung zum Herausfahren und damit zum Schliessen dieses Schalters freigegeben wird und der Betätiger einen den Verriegelungsbolzen (3) in seiner Lage haltenden Sperrhebel (64) freigibt, so dass der Verriegelungsbolzen in die im Betätiger (68) gebildete Verriegelungsöffnung (68b) einfährt, so dass die Tür verriegelt ist und die gefahrbringende Bewegung einschaltbar ist, und dass zum Türöffnen nach Betätigen des Schalters (59 bzw. 46) der den Stromkreis des Hubmagneten (6) derart schaltet, dass der Verriegelungsbolzen (3) aus der Verriegelungsöffnung (68b) herausfährt, beim Herausziehen des Betätigers (68) der Sperrhebel (64) des Verriegelungsbolzens (3) wieder einrastet und das Schaltstück (73) geschwenkt wird und den Stössel (16) in das Gehäuse (2) eingedrückt, der durch das Vorrücken des Sperrschiebers (74) über das Schaltstück (73) in dieser Lage gehalten wird, und damit der Öffnerschalter (20) geöffnet wird, so dass eine gefahrbringende Bewegung nicht einschaltbar ist.

**Claims**

1. Locking and safety device for a door protecting an apparatus performing dangerous motion, wherein a push rod (16) belonging to a safety limit scanner (20) and springsbiased outwards and a locking bolt (3) belonging to a lifting magnet (6) and springbiased outwards by a further spring (5) are held in an axially slidable manner in a wall of the housing (2) of the device, characterised by the fact that a single or multi-part actuator (68) for the push rod (16) of the switch (20) having the locking aperture (68b) for the locking bolt (3), is mounted on the door in such a manner that

a) the push-rod (16) through a cam (73a) of a pivotable switch piece (73), when the actuator (68) is held in the automatic inwardly directed position by a locking slide (74) holds the switch piece (73) against pivoting and that when the actuator (68) is inserted into the opening channel (78) the locking slide (74) is moved by the actuator (68) into a position in which it enables the switch piece (73) to pivot, and that on the further insertion of the actuator (68), the push rod (16) can slide into its outwardly directed basic position, and that

b) the locking bolt (3) when the actuator (68) has been pulled out, is non-displaceable held by a locking lever (64) in the position into which it has been drawn out of the locking aperture (68b) while during the insertion of the actuator (68) into the opening channel (78) the locking lever (64) is moved into and held in a position in which the locking bolt (3) can be caused to lock into the locking aperture (68b) in the actuator (68) and the locking lever (64) automatically re-locks the locking bolt (3) when the actuator (68) is pulled out.

2. Device in accordance with Claim 1, characterised by the fact that the locking slide (74) is displaceable parallel to the pivot on the switch piece (73) and subject to the pressure exerted by a spring (75) and directed towards the switch piece which has a sloping surface (74a) which is situated towards the insertion aperture of the opening channel and along which a lateral attachment piece (68c) of the actuator (68) can slide during the insertion into the opening channel (78) thus moving the locking slide (74) into the release position (Figure 4).

3. Device in accordance with Claim 1 or 2, characterised by the fact that the U-shaped switch piece (73) has the pivot (79) on the inside of its yoke connecting the two legs thereof and the switch cam (73) on the outside, while the actuator, when pushed in or pushed out, rests against one of the legs and thus pivots the switch piece (73), (Figure 3).

4. Device in accordance with any of Claims 1 to 3, characterised by the fact that the torsion spring (76) secured by one end in the housing (1 or 71) is situated around the pivot (79) of the switch piece (73), the other end of the spring engaging the switch piece (73) and securing this latter in its pivoting position when the actuator (68) has been pulled out.

5. Device in accordance with any one of Claims 1 to 4, characterised by the fact that the locking lever (64) is pivotably mounted and in one of its pivoting positions is secured at one end by a spring (66) in a recess (7a) of a bolt (7) of the lifting magnet armature holding the locking bolt (3) while in its other pivoting position it is secured by a clinched bolt (68a) on the actuator (68).

6. Device in accordance with any one of Claims 1 to 5, characterised by the fact that the opening channel (78) from the zone of the pivot (79) of the switch piece (73) and from the zone of the longitudinal axis of the locking bolt (3) is widened towards both sides in accordance with the pivoting path of a pivotable door.

7. Device in accordance with any one of Claims 1 to 6, characterised by the fact that the locking head (63) and the deviating head (70) are positioned in succession or adjacent to each other.

8. Device in accordance with any one of Claims 1 to 7, characterised by fact that the actuator (68) has a recess as a locking aperture (68b) and a recess (68d) through which the leg of the switch piece (73) can be pivoted when the actuator (68) is pushed and also a clinched bolt (68a) serving to secure the locking lever (64).

9. Device in accordance with any one of Claims 1 to 8, characterised by the fact that the actuator (68) is made in one piece, in the version for the arrangement of the locking head (63) and the deviating head (70) in succession, by separating parts according to separating lines (A - B, A - C, and B - D) the actuator (68) can also be used for the version in which the locking head and the pusher head are adjacent to each other.

10. Device in accordance with any one of Claims 1 to 9, characterised by the fact that the locking bolt (3) is mounted on its securing bolt (7) in a coupling (6a) in an axially and radially movable manner.

11. Process for the operation of a locking and safety device with the characteristics of any one of the Claims 1 to 10, characterised by the fact that after the operation of a switch (46 or 59) by which the current circuit of the lifting magnets (6a) can be switched for door closure by an actuator (68) which is mounted on the door and which enters the opening channel (78), the switch piece (73) is operated in such a way that the push rod (16) on the first switch (20) for the current circuit of the dangerous motion is released so that it can move out and thus close the said switch, the actuator then releases a locking lever (64) holding the locking bolt (3) in position, so that the locking bolt enters the locking aperture (68b) formed in the actuator (68) whereby the door is locked and the movement presenting danger can be performed, and that for the opening of the door, after the operation of the switch (59 or 46) which controls the current circuit of the lifting magnet (6) in such a way that the locking bolt (3) moves out of the locking aperture (68b), the locking lever (64) of the locking bolt (3) locks in again and the switch piece (73) is pivoted and presses the push rod (16) into the housing (2), the push rod being held in this position as a result of the forward movement of the locking slide (64) over the switch piece (73), the opener switch (20) being opened so that no dangerous motion can be initiated.

**Revendications**

1. Dispositif de verrouillage de sécurité pour une porte protégeant un dispositif à mouvements dangereux, dans lequel un coulisseau (16) d'un détecteur de position limite de sécurité (20) qui est sollicité par la force d'und ressort vers l'extérieur et une tige de verrouillage (3) d'un aimant de levage (6) qui est sollicitée vers l'extérieur par la force d'un autre ressort (5) sont maintenus de façon à pouvoir glisser axialement dans une paroi du boîtier du dispositif, caractérisé en ce que:

un élément d'actionnement en une ou plusieurs parties (68) destiné au coulisseau (16) de l'interrupteur (20) et comprenant l'ouverture de verrouillage (68b) destinée à la tige de verrouillage (3) de la porte est disposé de manière que:

a) le coulisseau (16) soit maintenu par l'intermédiaire d'une came (73a) d'un élément de commutation pivotant (73), lorsque l'élément d'actionnement (68) est retiré, de sa position forcée dirigée vers l'interieur par un verrou de blocage (74) maintenant l'élément de commutation (73) de façon qu'il ne puisse pas pivoter, et qui:

en enfonçant l'élément d'actionnement (68) dans le canal de passage (78) le verrou de blocage (74) soit amené par l'élément d'actionnement (68) dans une position dans laquelle l'élément de commutation (73) est libre de pivoter et que lorsque l'on continue d'enfoncer l'élément d'actionnement (68) le coulisseau (16) puisse coulisser dans sa position de base dirigée vers l'extérieur après pivotement de l'élément de commutation (73), et en ce que

b) la tige de verrouillage (3), lorsque l'élément d'actionnement (68) est retiré, peut être maintenue immobile par un verrou de blocage (64) dans sa position retirée de l'ouverture de verrouillage (68b), et lorsque l'élément d'actionnement (68) est enfoncé dans le canal de passage (78), le levier de blocage (64) est amené et maintenu dans une position dans laquelle la tige de verrouillage (3) se trouvant dans l'ouverture de verrouillage (68b) peut s'enclencher dans l'élément d'actionnement (68) et le levier de blocage (64) bloque à nouveau automatiquement la tige de verrouillage quand on retire l'élément d'actionnement (68).

2. Dispositif selon la revendication 1, caractérisé en ce que le verrou de blocage (74) qui peut être déplacé parallèlement à l'axe de pivotement de l'élément de commutation (73) et qui est soumis à la pression d'un ressort (75) en direction de l'élément de commutation comprend une surface oblique (74a) orientée vers l'ouverture d'introduction du canal de passage, contre laquelle peut glisser une partie latérale en saillie (68c) de l'élément d'actionnement (68) lors de l'enfoncement de ce dernier dans le canal de passage (78), et amenène ainsi le verrou de blocage (74) à sa position libre (Fig. 4).

3. Dispositif selon la revendication 1 ou 2, caractérisé en ce que la partie de dos reliant par ses branches l'élément de commutation en forme de U (73) comprend à l'intérieur l'axe de pivotement (79) et à l'extérieur la came de commutation (73a) et l'élément d'actionnement (68) s'applique lors de l'enfoncement et du retrait contre l'une des branches et fait ainsi pivoter l'élément de commutation (73) (Fig. 3).

4. Dispositif selon l'une quelconque des revendications 1 à 3, caractérisé en ce qu'un ressort de torsion (76) appliqué par une extrémité contre le boîtier (2 ou 71) s'applique autour de l'axe de pivotement (79) de l'élément de commutation (73), son autre extrémité pénétrant dans l'élément de commutation (73) et le maintenant dans sa position de pivotement quand l'élément d'actionnement (68) est retiré.

5. Dispositif selon l'une quelconque des revendications 1 à 4, caractérisé en ce que le verrou de blocage (64) est monté de façon pivotante et est maintenu dans l'une de ses positions de pivotement par l'une de ses extrémités et par un ressort (66) dans un évidement (7a) d'une tige (7) (de l'armature de l'aimant de levage) qui maintient la tige de verrouillage (3), et dans son autre position de pivotement par un tenon riveté (68a) de l'élément d'actionnement (68).

6. Dispositif selon l'une quelconque des revendications 1 à 5, caractérisé en ce que le canal de passage (78) qui est adapté à partir de la région de l'axe de pivotement (79) de l'élément de commutation (73) et à partir de la région de l'axe longitudinal de la tige de verrouillage (3) au parcours pivotant d'une porte pivotante, est élargi à ses deux extrémités.

7. Dispositif selon l'une quelconque des revendications 1 à 6, caractérisé en ce que la tête de verrouillage (63) et la tête de renvoi (70) sont disposées l'une à la suite de l'autre ou l'une contre l'autre.

8. Dispositif selon l'une quelconque des revendications 1 à 7, caractérisé en ce que l'élément d'actionnement (68) comprend un évidement formant l'ouverture de verrouillage (68b) et un évidement (68d) permettant le pivotement de la branche de l'élément de commutation (73) par poussée de l'élément d'actionnement (68), ainsi qu'un tenon riveté (68a) pour retenir le levier de blocage (64).

9. Dispositif selon l'une quelconque des revendications 1 à 8, caractérisé en ce que l'élément d'actionnement (68) est réalisé d'un seul tenant dans le mode de réalisation où la tête de verrouillage (63) et la tête de renvoi (70) sont disposées l'une à la suite de l'autre, et en ce que l'élément d'actionnement (68) peut être également utilisé lorsque la tête de verrouillage et la tête à coulisseau sont disposées l'une contre l'autre, par séparation des parties le long des lignes de séparation A - B ou A - C et B - D.

10. Dispositif selon l'une quelconque des revendications 1 à 9, caractérisé en ce que la tige de verrouillage (3) est montée flottante en direction axiale et radiale dans un accouplement (6a) au niveau de sa tige de support (7).

11. Procédé pour faire fonctionner un dispositif de verrouillage de sécurité présentant les caractéristiques selon l'une quelconque des revendications 1 à 10, caractérisé en ce qu'après actionnement d'un interrupteur (46 ou 59) par lequel le circuit de courant de l'aimant de levage (6) peut être excité pour fermer la porte au moyen d'un élément d'actionnement (68) monté sur la porte, qui pénètre dans le canal de passage (78), l'élément de commutation (73) est actionné de manière que le coulisseau (16) du premier interrupteur (20) destiné au circuit du courant destiné au mouvement dangereux soit libéré pour qu'il puisse sortir et ainsi fermer cet interrupteur, et l'élément d'actionnement libère un levier de blocage (64) maintenant la tige de verrouillage (3) dans sa position, ce qui fait que la tige de verrouillage pénètre dans l'ouverture de verrouillage (68) constituée dans l'élément d'actionnement (68), d'où il résulte que la porte est verrouillée et que le mouvement dangereux peut être démarré, et en ce que pour ouvrir la porte après actionnement de l'interrupteur (59 ou 46) qui met en circuit le circuit de courant de l'aimant de levage (6) de manière que la tige de verrouillage sorte de l'ouverture de verrouillage (68b), le levier de blocage (64) de la tige de verrouillage (3) s'enclenche à nouveau lorsque l'élément d'actionnement (68) est retiré, et l'élément de commutation (73) est pivoté et presse le coulisseau (16) dans le boîtier (2), coulisseau qui est maintenu dans cette position par avance du verrou de blocage (74) sur l'élément de commutation (73) et l'interrupteur d'ouverture (20) est ainsi ouvert, ce qui fait qu'un mouvement dangereux ne peut pas être démarré.

FIG.1

FIG.2

## FIG.3

FIG.3a

FIG.4

FIG.4a

FIG.5

FIG.6

FIG.7